# EUROPEAN PATENT SPECIFICATION

(11) **EP 1 881 219 B1**
(45) Date of publication and mention of the grant of the patent: **18.11.2009**
(21) Application number: 07111588.5
(22) Date of filing: 03.07.2007
(51) Int. Cl.: F16D 7/04, A01D 69/08

(54) **Torque limiter for a harvester row unit**
Drehmomentbegrenzer für ein Erntemaschinen-Reihengerät
Limiteur de couple pour unité rangée de moissonneuse

(30) Priority: 17.07.2006 US 487854
(43) Date of publication of application: 23.01.2008
(73) Proprietor: Deere & Company, Moline, IL 61265-8098 (US)
(72) Inventor: Downey, Michael B., Hampton, 61256 (US)
(74) Representative: Holst, Sönke

(56) References cited:
- GB-A- 710 246
- GB-A- 939 364
- US-A- 2 729 076
- US-A- 3 329 243
- US-A- 4 062 203

## Description

The invention relates to a torque limiter for a drive system for row units of a header according to the pre-amble of claim 1.

Harvester heads for row crops include several laterally disposed row units. Each row unit is oriented to gather and cut a single row of crops. The row units are driven by one or more elongated rotating drive shafts that extend across the width of the harvesting head. A typical drive shaft may be coupled to and drive ten or twelve different row units simultaneously.

The row units are located adjacent to the ground so all the crop plant is gathered for processing. The drive shafts extend across the width of the harvesting head, immediately adjacent to the ground.

In this position, the drive shafts and row units tend to accumulate plant matter lying on the ground. The torque limiters (also known as clutches, jaw clutches or slip clutches) that couple the drive shafts to the row units are particularly prone to being fouled and jammed by this matter due to the several exposed bolts that extend from the torque limiter. Furthermore, loosening the torque limiters to remove trash is difficult due to the several bolts that hold the torque limiters together.

A prior art torque limiter is described in US 5 092 440 A.

US 2 729 076 A discloses a torque limiter with a base that can rotate relative to the drive and driven shaft with the output plate, but it is not configured to communicate the drive torque.

What is needed, therefore, is an improved torque limiter for harvester row units that is protected from extraneous matter and that is easier to loosen, clean, adjust, and tighten. It is an object of this invention to provide such a torque limiter.

This object is achieved with the subject matter of claim 1. The dependent claims recite advantageous embodiments of the invention.

In accordance with a first aspect of the invention, a torque limiter is provided having a compression spring disposed within a shell that is threaded to a base.

An embodiment of the invention is shown in the drawings, in which:
Figure 1 is an exploded perspective view of the torque limiter of the present invention.
Figure 2 is a partial cutaway view of an assembled torque limiter.

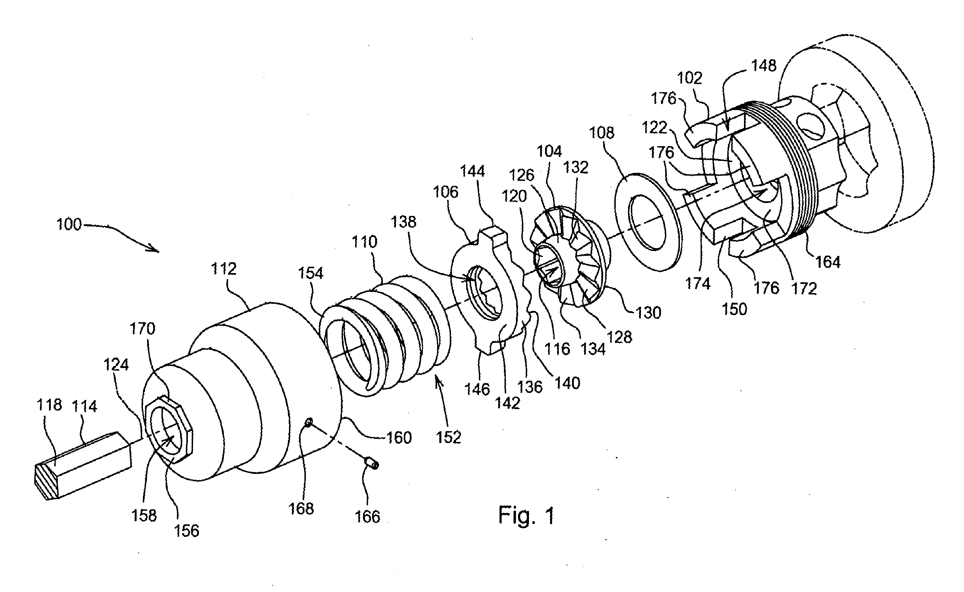

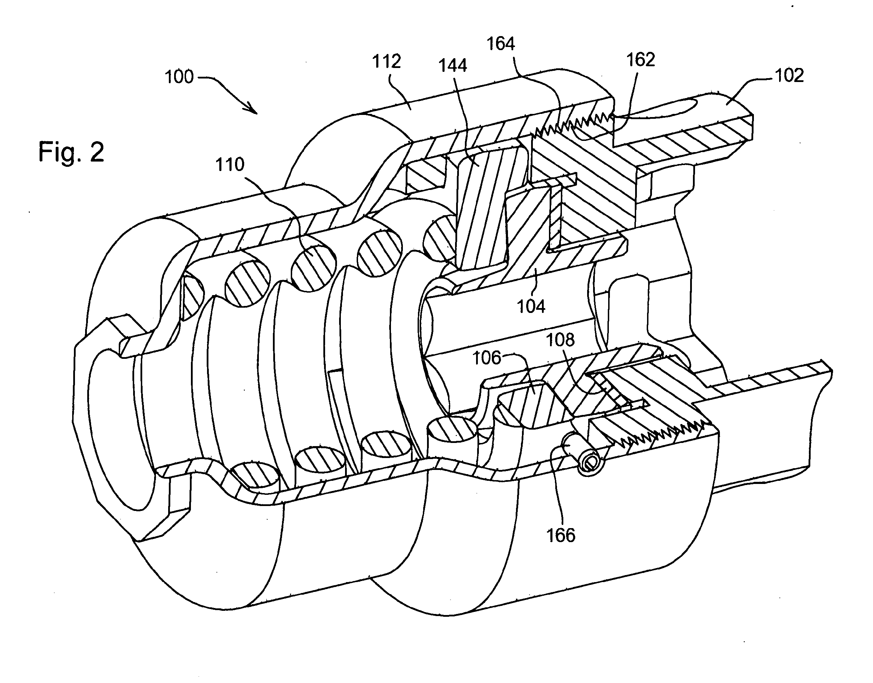

Referring now to Figures 1 and 2, a torque limiter (also known as a "slip clutch") 100 has a base 102 that supports an input plate 104, an output plate 106, a washer 108, a compression spring 110, and a shell 112.

A row unit drive shaft 114 for driving the torque limiter extends though an aperture 116 in the input plate 104 and engages plate 104 to communicate torque to it. The drive shaft 114 has external hexagonal flats 118 that mate with corresponding internal hexagonal flats 120 on the aperture extending through the input plate.

The input plate 104 is supported on a flat annular surface 122 of the base 102 for rotation with respect to the base 102 about a common longitudinal axis 124. The input plate 104 is generally formed as a collar 126 that extends around and engages the drive shaft 114, to which is fixed an outwardly extending flange 128. The flange 128 has one flat surface 130 that engages the base 102, and an opposing surface 132 with radially extending corrugations 134.

The output plate 106 includes a disk 136 with a central aperture 138, the disk 136 having one side that defines a similarly corrugated surface 140 that faces and engages the corrugated surface 140 of the input plate 104 and an opposing side that defines a surface 142 that faces and engages the compression spring 110. The output plate 106 also has two protrusions 144, 146 extending from opposite sides of the disk 136 that are disposed in opposing apertures 148, 150, respectively, formed in the base 102. The apertures 148, 150 and the protrusions 144, 146 are configured such that the output plate 106 communicates torque about the longitudinal axis 124 to the base 102 yet permits the output plate 106 to move in the longitudinal direction sufficiently to permit the output plate 106 to move from a first position in which the corrugations on the input plate 104 and the output plate 106 are intimately engaged to transmit torque one to the other, to a second position in which the input plate 104 and the output plate 106 are axially separated sufficient to permit them to rotate with respect to each other.

The spring 110 is a coiled compression spring having a longitudinal axis 124 that is coaxial with the other components of the torque limiter. It has a first end 152 that faces and engages the second surface of the output plate 106 and a second end 154 that faces and engages the inside surface of the shell 112.

The shell 112 is a generally bell- or cylindrical-shaped structure with a first end 156 that is generally enclosed. The first end 156 defines an aperture 158 that permits the driveshaft 114 to pass therethrough. The internal surface of the second, opposing end 160 of the shell 112 has threads 162 to engage mating threads 164 on the base 102. These threads 162, 164 have a root diameter greater than the outer diameter of the spring 110 and the spring 110 are disposed radially inside the threads 162. The threads 162, 164 are generally coaxial with the spring 110 and extend about the periphery of the spring 110, thereby distributing the spring pressure evenly to the threads 162, 164. A pin 166 is provided that extends through the wall of the shell 112 and into a space adjacent to the output plate 106. The pin 166 is preferably a roll pin and is long enough to engage structures (in this case, the protrusions 144, 146) in order to prevent the shell from completely unthreading itself. The shell 112 can unthread until the pin 166 abuts a protrusion 144, 146, at which point no further unthreading is possible. Structures 170 are provided on the shell 112 for tightening the shell 112 on the base 102, such as splines, holes, wrenching flats, protrusions configured to engage e.g. a tightening tool such as a pin, eye or hook spanner; wrench or rod.

The base 102 of the torque limiter 100 comprises a body 172 having an aperture 174 concentric with the longitudinal axis 124 of the base 102. The body 172 has a flat annular surface 122 generally normal to the longitudinal axis 124, and that faces toward the input 104 and output 106 plates and the spring 110. The washer 108 is disposed between the flat surface 130 of the input plate and the flat surface 122 of the base 102 to reduce friction and wear between the input plate 104 and the base 102. The base 102 includes a generally cylindrical sidewall 176 that is fixed to and extends from the body 172. The apertures 148, 150 that receive the protrusions 144, 146 extending from the output plate 106 are formed in the sidewall 176. The external threads 164 formed in the outer cylindrical surface of the sidewall engage the internal threads 162 formed on the inner surface of the second end 160 of the shell 112.

In use, the shell 112 is threaded onto the base 102 , to compress the spring 110. The spring 110 is compressed between the inner surface of the shell, and one side of the output plate. This spring compression forces the corrugated surface of the output plate to be compressed against the mating corrugated surface of the input plate. The input plate is compressed against the washer, which in turn is compressed against the body. The body is fixed to the sidewall, which is threaded to the shell, both the sidewall and the shell being in tension by the spring.

When a torque less than a predetermined threshold torque is applied to the drive shaft, it tends to rotate the input plate with respect to the output plate. As long as this torque is below the threshold, the two plates will rotate with respect to each other spreading apart and compressing the spring slightly to maintain a torque of equal and opposite value on the input plate. The corrugations will still remain engaged, however, although slightly offset. The torque applied by the input plate through the corrugations to the output plate is then communicated to the two protrusions on the output plate, and thence to sidewalls of the apertures in the base that receive the protrusions. The base then applies the torque through the surface structures of the base to the input gear of the row unit, which is driven thereby.

When the torque exceeds the predetermined threshold torque, the spring is compressed sufficient to permit the input and output plates to rotate with respect to each other, or "slip", hence the alternative term for this device: a "slip clutch". In this mode, the drive shaft can spin while the base and the input gear to the row unit remain stationary, or alternatively spin at a speed less than that of the drive shaft.

The torque applied to the row unit is thereby limited to the threshold torque. When the torque drops below the predetermined threshold torque the torque limiter automatically resets, the corrugations re-engage rather slip past each other, the input and output plates again rotate in synchrony, and the row unit is driven that the desired speed.

The shell may have various slots or apertures to permit water to leak out (for example) or to reduce weight. The shell may have external threads on its lower portion that engage internal threads formed on the base. The washer can be removed entirely if wear is not an issue, or replaced with a different structure that reduces wear such as a lubricant or a self lubricating metal. The corrugations can be replaced with any of a variety of different shapes that provide interengagement sufficient to communicate torque while preferably providing the automatic disengagement when torque over a predetermined threshold is applied. The corrugations can even be replaced with friction material, such as the material used for vehicular brake shoes or brake pads. The protrusion and interengaging aperture arrangement can be reversed by providing apertures on the output plate and protrusions on the base that interengage to prevent the output plate from rotating with respect to the base, thereby communicating torque from the output plate to the base in place of the existing arrangement. Alternatively, the protrusion and interengaging aperture arrangement can be supplemented by providing apertures on the output plate and protrusions on the base that interengage to prevent the output plate from rotating with respect to the base, thereby communicating torque from the output plate to the base. The apertures of the protrusion and aperture pairs can extend completely through the structure in which they are formed, or they can extend only partially into the structure. Additional protrusion and aperture pairs can be provided beyond the two illustrated in the figures. The hex flats of the input plate can be replaced with a clamp, splines or other structure that permits the transmission of torque. When the torque converter is used with other input devices that do not need a drive shaft extending through each torque limiter to engage other torque limiters, no aperture passing through the input plate is required, just the provision of mechanical structures of some form that will interengage with a shaft. In some applications, the input plate further comprises a shaft (instead of its illustrated aperture) that extends away from the torque limiter and to which some other shaft such as the drive shaft illustrated herein may be coupled, for example, with a rotary coupling. In another arrangement, the torque limiter may be configured to be disposed inside the row unit itself, rather than, as illustrated here, being disposed adjacent to the row unit and coupled thereto. The spring can be a stack of dished spring washers (often called Belleville washers or disc springs) that are separate or fixed together.

## Claims

1. A torque limiter (100) for limiting the torque applied to row units of an agricultural harvesting head, the limiter comprising:
a base (102) configured to communicate a drive torque to a row unit;
an output plate (106) coupled to the base (102) and configured to communicate the drive torque to the base (102);
an input plate (104) drivingly coupled to the output plate (106) and configured to communicate the drive torque to the output plate (106), the input plate (104) being configured to receive the drive torque from a row unit drive shaft (114);
a spring (110) disposed to press the input plate (104) against the output plate (106); and
a shell (112) surrounding the spring (110) and having an aperture (116) at a first end of the shell (112) to receive the row unit drive shaft (114),
**characterized in that** the base (102) has first external threads (164) extending about the periphery of the base (102) and that the shell (112) has second threads (162) engaging the first threads (164).

2. The torque limiter (100) of claim 1, wherein the shell (112) is cylindrical and surrounds and abuts an end of the spring (110).

3. The torque limiter (100) of claim 1, wherein the second threads (162) surround the spring (110).

4. The torque limiter (100) of claim 1, wherein the shell (112) further comprises means for tightening the shell (112) on the base (102).

5. The torque limiter (100) of claim 1, wherein the second threads (162) are generally coaxial with the spring (110).

## Patentansprüche

1. Drehmomentbegrenzer (100) zur Begrenzung des an Reiheneinheiten eines Erntemaschinenkopfs angelegten Drehmoments, wobei der Begrenzer Folgendes umfasst:
eine Basis (102), die zum Leiten eines Antriebsdrehmoments an eine Reiheneinheit konfiguriert ist;
eine mit der Basis (102) verbundene Ausgangsplatte (106), die zum Leiten des Antriebsdrehmoments an die Basis (102) konfiguriert ist;
eine mit der Ausgangsplatte (106) antriebsverbundene Eingangsplatte (104), die zum Leiten des Antriebsdrehmoments an die Ausgangsplatte (106) konfiguriert ist, wobei die Eingangsplatte (104) zum Empfang des Drehmoments von einer Reiheneinheitsantriebswelle (114) konfiguriert ist;
eine Feder (110) die zum Drücken der Eingangsplatte (104) gegen die Ausgangsplatte (106) konfiguriert ist; und
einen die Feder (110) umgebenden Mantel (112), der an einem ersten Ende des Mantels (112) eine Öffnung zur Aufnahme der Reiheneinheitsantriebswelle (114) aufweist,
**dadurch gekennzeichnet, dass** die Basis (102) ein erstes Außengewinde (164) aufweist, das sich um den Umfang der Basis (102) herum erstreckt, und dass der Mantel (112) ein zweites Gewinde (162) aufweist, das das erste Gewinde (164) in Eingriff nimmt.

2. Drehmomentbegrenzer (100) nach Anspruch 1, wobei der Mantel (112) zylindrisch ist und ein Ende der Feder (110) umgibt und daran anliegt.

3. Drehmomentbegrenzer (100) nach Anspruch 1, wobei das zweite Gewinde (162) die Feder (110) umgibt.

4. Drehmomentbegrenzer (100) nach Anspruch 1, wobei der Mantel (112) weiterhin ein Mittel zum Festziehen des Mantels (112) an der Basis (102) umfasst.

5. Drehmomentbegrenzer (100) nach Anspruch 1, wobei das zweite Gewinde (162) allgemein koaxial zu der Feder (110) verläuft.

## Revendications

1. Limiteur de couple (100) pour limiter le couple appliqué à des unités de rangée d'une tête de moissonneuse agricole, le limiteur comprenant :
une base (102) configurée pour communiquer un couple d'entraînement à une unité de rangée ;
une plaque de sortie (106) accouplée à la base (102) et configurée pour communiquer le couple d'entraînement à la base (102) ;
une plaque d'entrée (104) accouplée par entraînement à la plaque de sortie (106) et
configurée pour communiquer le couple d'entraînement à la plaque de sortie (106), la plaque d'entrée (104) étant configurée pour recevoir le couple d'entraînement d'un arbre d'entraînement d'unité de rangée (114) ;
un ressort (110) disposé de manière à presser la plaque d'entrée (104) contre la plaque de sortie (106) ; et
une calandre (112) entourant le ressort (110) et ayant une ouverture (116) au niveau d'une première extrémité de la calandre (112) pour recevoir l'arbre d'entraînement d'unité de rangée (114),
**caractérisé en ce que** la base (102) a des premiers filets extérieurs (164) s'étendant autour de la périphérie de la base (102) et **en ce que** la calandre (112) a des deuxièmes filets (162) s'engageant avec les premiers filets (164).

2. Limiteur de couple (100) selon la revendication 1, dans lequel la calandre (112) est cylindrique et entoure et bute contre une extrémité du ressort (110).

3. Limiteur de couple (100) selon la revendication 1, dans lequel les deuxièmes filets (162) entourent le ressort (110).

4. Limiteur de couple (100) selon la revendication 1, dans lequel la calandre (112) comprend en outre des moyens pour serrer la calandre (112) sur la base (102).

5. Limiteur de couple (100) selon la revendication 1, dans lequel les deuxièmes filets (162) sont généralement coaxiaux au ressort (110).
